# EUROPÄISCHE PATENTSCHRIFT

(11) **EP 4 168 192 B1**
(45) Veröffentlichungstag und Bekanntmachung des Hinweises auf die Patenterteilung: **03.07.2024**
(21) Anmeldenummer: 21728288.8
(22) Anmeldetag: 28.04.2021
(51) Int. Cl.: B21F 23/00, B21F 27/10, B21F 29/00, B23K 11/00, B65G 47/51, B65G 47/57

(54) **VORRICHTUNG UND VERFAHREN ZUM ZUFÜHREN VON QUERDRÄHTEN IN EINER GITTERSCHWEISSMASCHINE**
DEVICE AND METHOD FOR FEEDING TRANSVERSE WIRES IN A MESH WELDING MACHINE
DISPOSITIF ET PROCÉDÉ D'ALIMENTATION EN FILS TRANSVERSAUX DANS UNE MACHINE DE SOUDAGE DE TREILLIS

(30) Priorität: 17.06.2020 AT 1372020
(43) Veröffentlichungstag der Anmeldung: 26.04.2023
(73) Patentinhaber: EVG Entwicklungs- u. Verwertungs- Gesellschaft m.b.H., 8074 Raaba (AT)
(72) Erfinder: STINDL, Johann, 8410 Wildon (AT); DROSCHL, Georg, 8442 Kitzeck (AT)
(74) Vertreter: Schober, Elisabeth
(86) Internationale Anmeldenummer: PCT/IB2021/053534
(87) Internationale Veröffentlichungsnummer: WO 2021/255535

(56) Entgegenhaltungen:
- EP-A1- 0 378 617
- EP-A1- 1 368 145
- DE-A1- 2 622 167
- US-A- 4 853 511

## Beschreibung

Die Erfindung betrifft eine Vorrichtung zum Zuführen von Querdrähten oberhalb und unterhalb einer Produktionslinie für Gittermatten, die aus verschweißten Quer- und Längsdrähten bestehen, umfassend einen oberen Querdrahtzubringer, der einen Führungskanal aufweist und der in einer ersten Position angeordnet ist, in welcher Querdrähte entlang des Führungskanals der Produktionslinie zugeführt werden, sowie mit einem unteren Querdrahtzubringer, durch welchen Querdrähte von unten an die Produktionslinie förderbar sind, wobei ein unterer Querdrahtspeicher vorgesehen ist, aus welchem Querdrähte durch den unteren Querdrahtzubringer entnehmbar sind. Sie betrifft ferner ein Verfahren zum Zuführen von Querdrähten zu einer Produktionslinie für Gittermatten mit oben- und untenliegenden Querdrähten, welche mit einer Schar von Längsdrähten verschweißt werden, mit der sich wiederholenden Schrittfolge: (i) Entnahme eines Querdrahtes aus einem Magazin in einen Führungskanal eines oberhalb der Produktionslinie angeordneten oberen Querdrahtzubringers, (ii) Zuführen des Querdrahtes aus Schritt (i) zu der Schar von Längsdrähten, dann Entnahme eines Querdrahtes aus einem unterhalb der Produktionslinie angeordneten Querdrahtspeicher durch einen ebenso unterhalb der Produktionslinie angeordneten unteren Querdrahtzubringer, dann Zuführen des Querdrahtes aus dem vorangegangenen Schritt zu einer Schar von Längsdrähten.

Um ungewollten Zutritt zum Eigentum zu unterbinden, werden Firmenareale und Privatgrundstücke eingegrenzt. Dies kann auf unterschiedliche Weise erfolgen, jedoch hat sich eine Eingrenzung mit aus Stahldraht hergestellten Zäunen bestehend aus Zaunmatten als am wirtschaftlichsten gezeigt.

Die verschiedenen Varianten der Zaunmatten können so gestaltet sein, dass Querdrähte exakt ober- bzw. unterhalb des Längsdrahtes, Querdraht/Querdrähte ober- bzw. unterhalb in der Länge versetzt, Paare von Querdrähten oberhalb und Paare von Querdrähten unterhalb des Längsdrahtes angeordnet sind und Zaunmatten mit Querdrähten oberhalb oder Querdrähten nur unterhalb der Längsdrähte verschweißt sind.

Mit einer Abfolge von Zaunmatten mit Querdrähten oberhalb der Längsdrähte und mit Querdrähten unterhalb der Längsdrähte kann die Stapelhöhe auf ungefähr die Hälfte reduziert werden.

Stand der Technik ist, dass die Zaunmatten, als Beispiel die "Zaundoppelstabmatte", mit quer zur Produktionsrichtung liegenden Doppelstäben, d.h. ein Querdraht ist oberhalb und ein Querdraht ist unterhalb des Längsdrahtes, produziert werden. Die bei der Zaundoppelstabmatte aufzuschweißenden exakt gegenüberliegenden Querdrähte werden während der Produktion der Zaunmatte in der Schweißanlage an der identen Position verschweißt. Stand der Technik ist auch, dass bei geringeren Stückzahlen die Zaunmatten aus vorgelängten Längsdrähten produziert werden.

Ein Problem des Standes der Technik ist es, dass aufgrund der Zaunmattenkonfiguration wesentlich mehr Längs- als Querdrähte verschweißt werden und dadurch Stillstandszeiten zwischen der Produktion der einzelnen Zaunmatten entstehen können. Bei z.B. einer Standard-Zaundoppelstabmatte mit einer Abmessung von 3 x 2 m kann das Zeitverhältnis zwischen der Längsdrahtaufbereitung und der Produktion der Zaunmatte bis zu 2:1 annehmen.

Die für die Produktion notwendigen vorabgelängten Querdrähte werden bisher aus einem Querdrahtmagazin, das aus einem Querdrahtbund die Querdrähte vereinzelt oder durch ein Inline-Drahtrichtanlage beschickt wird, der Schweißmaschine zugeführt.

Um diese Zaundoppelstabmatten oder auch Zaungittermatten mit Querdraht oben bzw. unterhalb des Längsdrahtes herstellen zu können, werden heute zwei Querdrahtmagazine, ein Magazin oberhalb der Produktionslinie, ein Magazin unterhalb oder unterhalb und seitlich der Produktionslinie, angeordnet.

Der Nachteil der Variante mit dem Querdrahtmagazin unterhalb der Produktionslinie liegt in der Befüllung, Wartung und Störungsbehebung bei der Querdrahtvereinzelung oder Querdrahtzubringung.

Der Nachteil der Variante mit dem Querdrahtmagazin unterhalb und seitlich der Produktionslinie liegt im zusätzlichen Platzbedarf und in der Notwendigkeit einer zusätzlichen Transportvorrichtung zur Schweißlinie. Um eine Produktion mit angemessener Geschwindigkeit und Positionsgenauigkeit sicherzustellen, ist diese mit aufwändiger elektrischer Antriebstechnik auszurüsten. Ein weiterer Nachteil liegt darin, dass bei Querdrahtdurchmesser- und Querdrahtlängenänderungen immer zwei Querdrahtmagazine umgerüstet werden müssen. Zusammengefasst liegen die Nachteile der zuvor angeführten Querdrahtvarianten in den Investitions-, Wartungs- und Rüstkosten.

Vorrichtungen des Standes der Technik sind beispielsweise aus EP 0 378 617 A1, DE 26 22 167 A1, US 4 853 511 A und EP 1 368 145 A1 bekannt. So zeigt EP 0 378 617 A1 eine Gitterschweißmaschine der eingangs genannten Art, in welcher abgelängte Querdrahtstäbe sowohl von oben als auch von unten den Schweißvorrichtungen zugeführt werden. Dies dafür, dass Querdrähte beidseitig einer Drahtgittermatte zügig und einfach verschweißt werden. Dazu sind Leitbleche 25, 25' und Querdrahtzubringer 25 und 27 beidseitig der Schweißebene angeordnet und wirksam. Der obere Querdrahtzubringer ist als eine an mehreren Positionen befestigten Rutsche für eine fortwährend bestehende Reihung von Querdrähten ausgebildet.

Die EP 1 368 145 A1 zeigt eine Drahtgittermattenschweißmaschine, die über Querdrahtkanäle 23 und 23' sowie Querdrahtführungen 27, 27' Querdrähte von oben und von unten getrennt der Schweißebene zuführt. Die Kanäle und die Führungen sind feststehend, ein unterer Querdrahtspeicher ist entweder nicht vorhanden oder weit entfernt von den Querdrahtführungen angeordnet.

Die Erfindung zielt nun darauf ab, dass die zuvor genannten Nachteile vermieden werden. Die erfindungsgemäße Vorrichtung erreicht dies dadurch, dass der obere Querdrahtzubringer als Querdrahtweiche ausgebildet ist, die mindestens in eine zweite Position schwenkbar ist, wobei durch die Querdrahtweiche in der zweiten Position der untere Querdrahtspeicher mit Querdrähten beschickbar ist.

Das erfindungsgemäße Verfahren überwindet die Nachteile des Standes der Technik dadurch, dass nach Schritt (ii) und vor dem anschließenden Schritt die Schritte erfolgen:
(iii) Entnahme eines weiteren Querdrahtes aus einem Magazin in den Führungskanal des oberen Querdrahtzubringers und Schwenken des als Querdrahtweiche ausgebildeten Querdrahtzubringers in eine zweite Position,
(iv) Zuführen des Querdrahtes aus Schritt (iii) in eine Parkposition des unteren Querdrahtspeichers,
(v) Schwenken der Querdrahtweiche zurück in die erste Position.

Weitere Merkmale der erfindungsgemäßen Anlage und des Verfahrens finden sich in den abhängigen Ansprüchen.

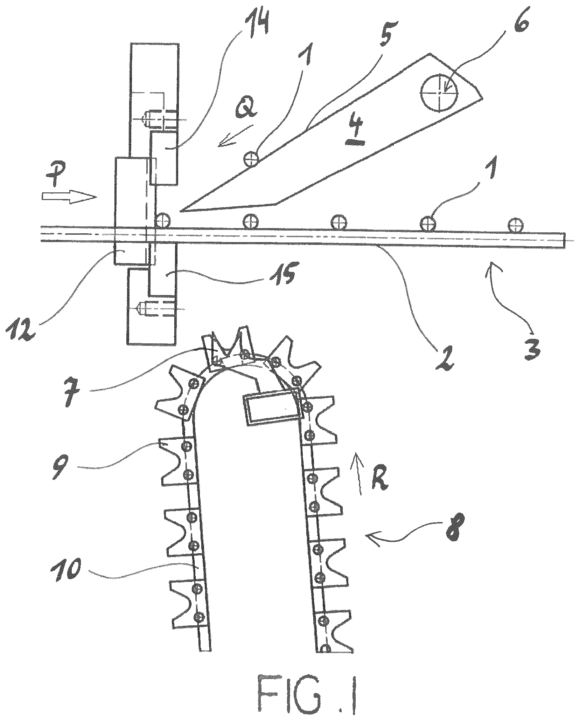

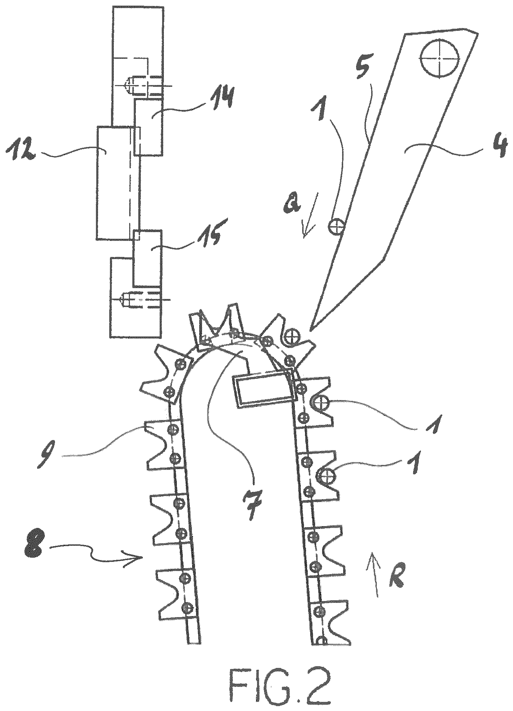

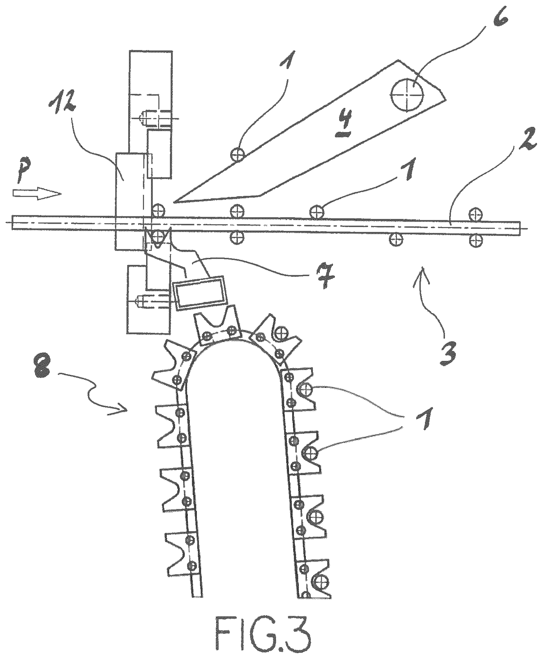

Die Erfindung wird nachstehend anhand eines in den Zeichnungen dargestellten Ausführungsbeispiels näher erläutert. Es zeigen: Fig. 1 und 3 jeweils eine schematische Seitenansicht der Vorrichtung, Fig. 2 eine schematische Seitenansicht unter Weglassung der Gittermatte.

Gemäß Fig. 1 wird ein Element z.B. einer Zaundoppelstabmatte in Form einer Drahtgittermatte 3 durch Verschweißen von oben- und untenliegenden Querdrähten 1 mit einer Schar von Längsdrähten 2 hergestellt. Die Schar von Längsdrähten 2 (in Fig. 1 und 3 ist in Seitenansicht nur ein Längsdraht 2 zu sehen) liegt in einer Produktionslinie und wird taktweise entlang der Produktionsrichtung P vorgeschoben. Die zugeführten Querdrähte 1 kommen am Querdrahtanschlag 12 zur Ruhe und werden mittels oberen Elektroden 14 und unteren Elektroden 15 nach der elektrischen Widerstandsmethode mit den Längsdrähten verschweißt.

Für die taktweise Querdrahtzuführung wird ein obenliegendes Querdrahtmagazin (nicht gezeigt) mit einer Drahtweiche 4 ausgerüstet, so dass während einer Stillstandspause in der Mattenproduktion ein Querdrahtspeicher 8 - kann auch ein Querdrahtmagazin sein - unterhalb der Produktionslinie befüllt werden kann. Die noch im Stand der Technik problematische Stillstandszeit wird durch die Erfindung vorteilhaft ausgenutzt.

Die Querdrahtweiche 4 ist so ausgeführt, dass ein Führungskanal 5 in zwei vordefinierten Positionen geschwenkt werden kann (können auch mehrere Positionen sein). Die erste Position dient, wie in Fig. 1 gezeigt, dem Zuführen eines Querdrahtes 1 oberhalb der Produktionslinie direkt in die Produktions- bzw. Schweißlinie. In der zweiten Position des Führungskanals 5 (siehe Fig. 2) kann der Querdrahtspeicher 8 - oder auch das untere Querdrahtmagazin - unterhalb der Produktionslinie befüllt werden. Der Führungskanal 5 ist im einfachsten Fall gemäß der Fig. 1 bis 3 die Bahn auf dem Arm der Querdrahtweiche 4, in welcher entlang Richtung Q ein Querdraht 1 zum vorbestimmten Ort geführt wird. Der Ausgang des Führungskanals 5 ist in der ersten Position der vorbestimmte Ort für die Verschweißung eines oberen Querdrahtes 1 am Querdrahtanschlag 12 und in der zweiten Position eine Parkposition in einem Schlitten 9 des unteren Querdrahtspeichers 7. Die oben- und untenliegenden Querdrahtzuführungen sind so aufgebaut, dass diese die Querdrähte an die idente Position (gegenüberliegend an den Längsdrähten 2) in Flussrichtung gesehen zubringen können.

Die Querdrahtweiche 4 ist auf einem Drehzapfen gelagert, welcher in einer Achse 6 liegt, um die sich die Querdrahtweiche 4 zwischen den mindestens zwei Position drehen kann. Die Achse 6 verläuft parallel zu den Längsachsen der zu verarbeitenden Querdrähte 1. Es ist lediglich bei der Konstruktion der Vorrichtung darauf zu achten, dass die Querdrahtweiche 4 frei zwischen anderen Elementen der Vorrichtung sowie einer in Produktion befindlichen Drahtgittermatte schwenkbar ist.

Der Querdrahtspeicher 8, der unterhalb der Produktionslinie positioniert ist, ist so ausgeführt, dass eine ausreichende Anzahl von Querdrähten einzeln aufgenommen und bei Bedarf getaktet wieder an eine untere Querdrahtzuführung 7 abgegeben werden kann. Da es zweckdienlich ist, die Produktionslinie bezüglich der Schwerkraft horizontal auszulegen, werden dadurch die ebenso entlang der Schwerkraftrichtung angeordneten Bereiche "oberhalb" und "unterhalb" der Produktionslinie definiert.

Gemäß Fig. 2 besteht der untere Querdrahtspeicher 8 aus einer Gruppe von Drahtaufnahmeelementen (z.B. Schlitten 9), die auf einer endlosen Transportkette 10 angeordnet und taktweise in Richtung R verfahrbar sind. Das Speichervolumen des unteren Querdrahtspeichers 8 kann klein oder groß bemessen sein und dadurch Herstellungs- und Betriebskosten anpassen helfen; von den Parkpositionen für Querdrähte 1 können im laufenden Betrieb wenige, bis etwa 100 tatsächlich mit Querdrähten 1 besetzt sein.

Die unter der Produktionslinie positionierte Querdrahtzuführung 7 dient zur Zuführung des Querdrahtes 1 in die Schweißlinie und kann aufgrund der kurzen Verfahrwege sehr einfach ausgeführt werden. Gemäß Fig. 3 ist die Länge des Verfahrweges nur durch den Mindestabstand einer Position eines Drahtaufnahmeelementes mit einem zu transportierenden Querdraht 1 bis zu dem Schweißort unterhalb der Produktionslinie bedingt. Die Querdrahtzuführung 7 ist im einfachsten Fall eine Gabel, die den Querdraht 1 aus einem als Schlitten 9 ausgebildeten Drahtaufnahmeelement unter Nutzung der Schwerkraft und gegebenenfalls einfacher Arretiermittel heraushebt und von unten an die Längsdrähte 2 drückt. Dieser kurze Verfahrweg ermöglicht auch eine sehr dynamische Arbeitsweise mit kurzen Taktzeiten.

Gemäß bisheriger automatisierter Gitterschweißverfahren wird eine vorbereitete Schar von Längsdrähten 2, wie in Fig. 1 und 3 dargestellt, taktweise in Produktionsrichtung P vorgeschoben. Eine obere und eine untere Zuführung bringen zwei Querdrähte 1 gegenüberliegend an die Längsdrähte 2 bis zu einer Position, an der sie verschweißt werden. Zuvor haben die Zuführungen die Querdrähte 1 aus Querdrahtmagazinen entnommen. Zu diesen sich wiederholenden Schritten zur Produktion z.B. einer Zaundoppelstabmatte treten nun die Schritte des Schwenkens der oberen Zuführung in Form einer Querdrahtweiche 4 in eine zweite Position zum Befüllen des unteren, klein ausgelegten Querdrahtspeichers 8 hinzu und die Übergabe von einem oder auch mehreren Querdrähten in diesen Querdrahtspeicher 8.

Daraufhin schwenkt die Querdrahtweiche 4 zurück in ihre erste Position, um den nächsten Querdraht 1 von oben der Produktionslinie zuzuführen. Die Erfindung nutzt die oben genannten unvermeidbaren Stillstandszeiten der Maschine zwischen der Herstellung aufeinanderfolgender Matten oder zwischen den Schweißmomenten: Das heißt, dass die Zeit, die für die Produktion benötigt wird, auch für die Befüllung des untenliegenden Querdrahtspeichers 8 (oder des Drahtmagazins) zur Verfügung steht.

In einer Variante könnte die obere Querdrahtweiche 4 einen Querdraht 1 direkt an die untere Querdrahtzuführung 7 übergeben. Ein unterer Querdrahtspeicher 8 könnte dann ganz entfallen, vermindert um den Nachteil, dass es auch keinen Puffervorrat an unteren Querdrähten 1 mehr gibt. Dies wäre beispielsweise beim Verschweißen des ersten Querdrahtpaares einer Matte möglich, wenn die Längsdrähte noch nicht in den Fahrweg der Querdrahtweiche 4 hineinreichen.

In einer weiteren Variante ist das Fassungsvermögen des unteren Querdrahtspeichers 8 so groß, dass die Anzahl von Querdrähten 1 für eine vollständige Gittermatte darin aufgenommen werden kann. So könnte der untere Querdrahtspeicher 8 in dem Zeitabschnitt zwischen der Produktion zweier aufeinanderfolgender Gittermatten gefüllt werden. Der Vorteil der Erfindung wird sogar auch dann erreicht, wenn der untere Querdrahtspeicher die Anzahl von Querdrähten 1 für einen ganzen Mattenstapel fasst und dafür einmalig vor Produktionsbeginn gefüllt wird.

In einer weiteren Alternative wird der untere Querdrahtspeicher 8 seitlich herausgefahren, um mit Querdrähten 1 neben der Produktionslinie bzw. neben einer sich in Produktion befindlichen Gittermatte beschickt zu werden. Der Fachmann wählt dann etablierte Mittel, um auch die Querdrahtweiche 4 entsprechend seitlich auszulenken.

Ein weiterer Vorteil des Verfahrens besteht darin, den taktweise sich wiederholenden Ablauf der Schrittfolge für die Produktion von Gittermatten auch zusammen mit der Beschickung des unteren Querdrahtspeichers 8 durch die Querdrahtweiche 4 im Rahmen der ohnehin verwendeten elektronischen Steuerung zu programmieren. Die abgestimmten Verfahrensschritte können weiters in eine Umgebung mit dem Wechsel des Querdrahtmaterials eingebettet werden.

## Patentansprüche

1. Vorrichtung zum Zuführen von Querdrähten (1) oberhalb und unterhalb einer Produktionslinie für Gittermatten (3), die aus verschweißten Quer- und Längsdrähten bestehen, umfassend einen oberen Querdrahtzubringer, der einen Führungskanal (5) aufweist und der in einer ersten Position angeordnet ist, in welcher Querdrähte (1) entlang des Führungskanals (5) der Produktionslinie zugeführt werden, sowie mit einem unteren Querdrahtzubringer (7), durch welchen Querdrähte (1) von unten an die Produktionslinie förderbar sind, wobei ein unterer Querdrahtspeicher (8) vorgesehen ist, aus welchem Querdrähte (1) durch den unteren Querdrahtzubringer (7) entnehmbar sind, **dadurch gekennzeichnet, dass** der obere Querdrahtzubringer als Querdrahtweiche (4) ausgebildet ist, die mindestens in eine zweite Position schwenkbar ist, wobei durch die Querdrahtweiche (4) in der zweiten Position der untere Querdrahtspeicher (8) mit Querdrähten beschickbar ist.

2. Vorrichtung nach Anspruch 1, **dadurch gekennzeichnet, dass** die Querdrahtweiche (4) ein Arm ist, der über eine Achse (6), die parallel zu der Achse von verarbeiteten Querdrähten (1) liegt, zwischen der ersten und der zweiten Position schwenkbar ist.

3. Vorrichtung nach Anspruch 1 oder 2, **dadurch gekennzeichnet, dass** der Ausgang des Führungskanals (5) der Querdrahtweiche (4) in der zweiten Position an einer Parkposition für Querdrähte (1) des unteren Querdrahtspeichers (8) liegt.

4. Vorrichtung nach einem der Ansprüche 1 bis 3, **dadurch gekennzeichnet, dass** der untere Querdrahtspeicher (8) Drahtaufnahmeelemente zur Aufnahme von Querdrähten (1) umfasst, die an einer unendlichen Transportkette (10) angeordnet sind.

5. Vorrichtung nach einem der Ansprüche 1 bis 4, **dadurch gekennzeichnet, dass** der untere Querdrahtzubringer (7) mindestens eine Gabel umfasst, durch welche ein vereinzelter Querdraht (1) zur Produktionslinie hebbar ist.

6. Vorrichtung nach einem der Ansprüche 1 bis 5, **dadurch gekennzeichnet, dass** die Querdrahtweiche (4) mit einem Magazin für Querdrähte (1) derart verbunden ist, dass vereinzelte Querdrähte (1) in ihren Führungskanal (5) aufnehmbar sind.

7. Verfahren zum Zuführen von Querdrähten (1) zu einer Produktionslinie für Gittermatten (3) mit oben- und untenliegenden Querdrähten (1), welche mit einer Schar von Längsdrähten (2) verschweißt werden, mit der sich wiederholenden Schrittfolge
(i) Entnahme eines Querdrahtes (1) aus einem Magazin in einen Führungskanal (5) eines oberhalb der Produktionslinie angeordneten oberen Querdrahtzubringers,
(ii) Zuführen des Querdrahtes (1) aus Schritt (i) zu der Schar von Längsdrähten (2),
(vi) Entnahme eines Querdrahtes (1) aus einem unterhalb der Produktionslinie angeordneten Querdrahtspeicher (8) durch einen ebenso unterhalb der Produktionslinie angeordneten unteren Querdrahtzubringer (7),
(vii) Zuführen des Querdrahtes (1) aus Schritt (vi) zu einer Schar von Längsdrähten (2),
**dadurch gekennzeichnet, dass** nach Schritt (ii) und vor Schritt (vi) die Schritte erfolgen:
(iii) Entnahme eines weiteren Querdrahtes (1) aus einem Magazin in den Führungskanal (5) des oberen Querdrahtzubringers und Schwenken des als Querdrahtweiche (4) ausgebildeten Querdrahtzubringers in eine zweite Position,
(iv) Zuführen des Querdrahtes 1 aus Schritt (iii) in eine Parkposition des unteren Querdrahtspeichers (8),
(v) Schwenken der Querdrahtweiche (4) zurück in die erste Position.

8. Verfahren zum Herstellen von Gittermatten (3) mit den Schritten des Verfahrens nach Anspruch 7 mit den sich wiederholenden weiteren Schritten:
- taktweises Vorschieben einer Schar von Längsdrähten (2) in einer Produktionslinie,
- Verschweißen eines Paares von oberen und unteren zugeführten Querdrähten (1) mit der Schar von Längsdrähten (2) .

## Claims

1. A device for feeding the cross wires (1) above and below a production line for mesh mats (3), which consist of welded cross and longitudinal wires, comprising an upper cross-wire feeder, which has a guide channel (5) and which is arranged in a first position, in which cross wires (1) are fed along the guide channel (5) of the production line, as well as having a lower cross-wire feeder (7), through which cross wires (1) can be conveyed to the production line from below, wherein a lower cross-wire storage device (8) is provided, from which cross wires (1) can be removed through the lower cross-wire feeder (7), **characterized in that** the upper cross-wire feeder is designed as a cross-wire switch (4) which can be pivoted into at least one second position, wherein, in the second position, the lower cross-wire storage device (8) can be supplied with cross wires by means of the cross-wire switch (4).

2. The device according to claim 1, **characterized in that** the cross-wire switch (4) is an arm which can be pivoted between the first and the second position over an axis (6), which is parallel to the axis of processed cross wires (1).

3. The device according to claim 1 or 2, **characterized in that**, in the second position, the outlet of the guide channel (5) of the cross-wire switch (4) lies in a park position for cross wires (1) of the lower cross-wire storage device (8).

4. The device according to any of claims 1 to 3, **characterized in that** the lower cross-wire storage device (8) comprises wire pickup elements for picking up cross wires (1) which are arranged on a continuous transport chain (10).

5. The device according to any of claims 1 to 4, **characterized in that** the lower cross-wire feeder (7) comprises at least one fork, by means of which a separated cross wire (1) can be lifted to the production line.

6. The device according to any of claims 1 to 5, **characterized in that** the cross-wire switch (4) is connected to a magazine for cross wires (1) such that the separated cross wires (1) can be picked up in the guide channel (5) thereof.

7. A method for feeding cross wires (1) to a production line for mesh mats (3) with upper and lower cross wires (1), which can be welded to a set of longitudinal wires (2), with the repeating sequence of steps
(i) removal of a cross wire (1) from a magazine in a guide channel (5) of an upper cross-wire feeder arranged above the production line;
(ii) feeding of the cross wire (1) from step (i) to the set of longitudinal wires (2);
(vi) removal of a cross wire (1) from a cross-wire storage device (8) arranged underneath the production line through a lower cross-wire feeder (7) also arranged underneath the production line;
(vii) feeding of the cross wire (1) from step (vi) to a set of longitudinal wires (2),
**characterized in that**, after step (ii) and before step (vi), the steps take place as follows:
(iii) removal of a further cross wire (1) from a magazine and placement in the guide channel (5) of the upper cross-wire feeder and pivoting of the cross-wire feeder, which is designed as a cross-wire switch (4), into a second position;
(iv) feeding of the cross wire (1) from step (iii) into a park position of the lower cross-wire storage device (8);
(v) pivoting of the cross-wire switch (4) back into the first position.

8. A method for producing mesh mats (3) with the steps of the method according to claim 7 with the repeating, further steps:
- cyclic advancing of a set of longitudinal wires (2) in a production line;
- welding of a pair of upper and lower supplied cross wires (1) to the set of longitudinal wires (2).

## Revendications

1. Dispositif conçu pour délivrer des fils transversaux (1) au-dessus et au-dessous d'une ligne de production destinée à des nattes de treillis (3) constituées de fils transversaux et longitudinaux solidarisés par soudage, comprenant un distributeur supérieur de fils transversaux, muni d'un canal de guidage (5) et disposé en un premier emplacement auquel des fils transversaux (1) sont délivrés à la ligne de production le long dudit canal de guidage (5), ainsi qu'un distributeur inférieur (7) de fils transversaux, par l'intermédiaire duquel des fils transversaux (1) peuvent être convoyés de bas en haut vers ladite ligne de production, sachant qu'il est prévu un accumulateur inférieur (8) de fils transversaux, à partir duquel des fils transversaux (1) peuvent être prélevés par l'intermédiaire dudit distributeur inférieur (7) de fils transversaux, **caractérisé par le fait que** le distributeur supérieur de fils transversaux est réalisé sous la forme d'un aiguilleur (4) de fils transversaux, au moins apte à pivoter vers un second emplacement, l'accumulateur inférieur (8) de fils transversaux pouvant être alimenté en fils transversaux par l'intermédiaire dudit aiguilleur (4) de fils transversaux occupant ledit second emplacement.

2. Dispositif selon la revendication 1, **caractérisé par le fait que** l'aiguilleur (4) de fils transversaux est un bras apte à pivoter, entre les premier et second emplacements, par l'intermédiaire d'un axe (6) agencé parallèlement à l'axe de fils transversaux (1) traités.

3. Dispositif selon la revendication 1 ou 2, **caractérisé par le fait que** la sortie du canal de guidage (5) de l'aiguilleur (4) de fils transversaux, occupant le second emplacement, se trouve en un emplacement d'attente dévolu à des fils transversaux (1) de l'accumulateur inférieur (8) de fils transversaux.

4. Dispositif selon l'une des revendications 1 à 3, **caractérisé par le fait que** l'accumulateur inférieur (8) de fils transversaux inclut des éléments de réception de fils, conçus pour recevoir des fils transversaux (1) et situés sur une chaîne convoyeuse (10) sans fin.

5. Dispositif selon l'une des revendications 1 à 4, **caractérisé par le fait que** le distributeur inférieur (7) de fils transversaux inclut au moins une fourche par l'intermédiaire de laquelle un fil transversal (1) dissocié peut être soulevé vers la ligne de production.

6. Dispositif selon l'une des revendications 1 à 5, **caractérisé par le fait que** l'aiguilleur (4) de fils transversaux est relié à un magasin dédié à des fils transversaux (1), de telle sorte que des fils transversaux (1) dissociés puissent être insérés dans leur canal de guidage (5).

7. Procédé de délivrance de fils transversaux (1) à une ligne de production destinée à des nattes de treillis (3) constituées de fils transversaux (1) occupant des positions supérieures et inférieures, solidarisés par soudage avec une nappe de fils longitudinaux (2), présentant la succession répétitive d'étapes consistant à
(i) prélever un fil transversal (1), à partir d'un magasin, vers un canal de guidage (5) d'un distributeur supérieur de fils transversaux disposé au-dessus de la ligne de production,
(ii) délivrer, à la nappe de fils longitudinaux (2), ledit fil transversal (1) provenant de l'étape (i),
(vi) prélever un fil transversal (1) à partir d'un accumulateur (8) de fils transversaux, disposé au-dessous de la ligne de production, par l'intermédiaire d'un distributeur inférieur (7) de fils transversaux pareillement disposé au-dessous de ladite ligne de production,
(vii) délivrer, à une nappe de fils longitudinaux (2), ledit fil transversal (1) provenant de l'étape (vi),
**caractérisé par le fait que** les étapes suivantes se déroulent après l'étape (ii) et avant l'étape (vi) :
(iii) prélèvement d'un fil transversal (1) supplémentaire, à partir d'un magasin, vers le canal de guidage (5) du distributeur supérieur de fils transversaux et pivotement imprimé, vers un second emplacement, au distributeur de fils transversaux réalisé sous la forme d'un aiguilleur (4) de fils transversaux,
(iv) délivrance dudit fil transversal (1), provenant de l'étape (iii), à un emplacement d'attente de l'accumulateur inférieur (8) de fils transversaux,
(v) pivotement rétrograde imprimé audit aiguilleur (4) de fils transversaux, vers le premier emplacement.

8. Procédé de fabrication de nattes de treillis (3) par les étapes du procédé conforme à la revendication 7, comprenant les étapes réitérées supplémentaires consistant à :
- faire progresser, en mode cadencé, une nappe de fils longitudinaux (2) dans une ligne de production,
- solidariser par soudage une paire de fils transversaux (1) délivrés, supérieurs et inférieurs, avec ladite nappe de fils longitudinaux (2).
